# EUROPEAN PATENT SPECIFICATION

(11) **EP 2 424 006 B1**
(45) Date of publication and mention of the grant of the patent: **19.03.2014**
(21) Application number: 11177698.5
(22) Date of filing: 16.08.2011
(51) Int. Cl.: H01M 2/20, H01M 10/48, H01M 10/42

(54) **Battery pack**
Batteriepack
Bloc-batteries

(30) Priority: 30.08.2010 US 378348 P; 16.06.2011 US 201113162489
(43) Date of publication of application: 29.02.2012
(73) Proprietor: Samsung SDI Co., Ltd., Yongin-si, Gyeonggi-do (KR)
(72) Inventor: Ryu, Jae-Uk, Gyeonggi-do (KR); Hong, Jin-Tae, Gyeonggi-do (KR)
(74) Representative: Walaski, Jan Filip

(56) References cited:
- EP-A1- 2 197 071
- US-A1- 2009 124 099
- US-A1- 2009 246 615

## Description

The present invention relates to a battery pack, and more particularly, to a battery pack having improved reliability.

A power supply device adopted by a notebook or the like comprises a battery pack formed of one or more battery cells connected in series and/or parallel in order to obtain a desired voltage and a desired capacity. Here, the connection of the plurality of battery cells in series and/or parallel is achieved by soldering 01 welding the respective battery cells using connection tabs. A protective circuit module (PCM) such as a charge/ discharge control circuit and/or a protective circuit may be mounted on the battery cells. Here, the PCM and the battery cells may be electrically connected using terminal tabs.

EP 2 197 071 A1 discloses a battery pack with a terminal tab that has an exposed surface to enable the tab to be electrically connected to the PCM.

US 2009/0246615 A1 discloses a battery pack that prevents a solder material from flowing down due to a tab electrically connecting a battery to a PCM.

US 2009/0124099 A1 discloses a PCM having a plurality of soldering holes.

Embodiments of the invention provide a battery pack in which a portion of an insulating member attached to an external surface of a terminal tab is inserted into an insertion hole of a PCM to prevent disconnection of the terminal tab in a position corresponding to the insertion hole.

According to an aspect of the present invention, there is provided a battery pack according to claim 1.

According to an aspect of the present invention, there is provided a battery pack comprising at least one battery cell, a protection circuit module PCM mounted to the at least one battery cell, a terminal tab to electrically connect the at least one battery cell to the PCM and an insulating member on a surface of the terminal tab, wherein the PCM comprises a through hole into which a first portion of the terminal tab is inserted, the first portion being partly covered by the insulating member so that a portion of the insulating member is inserted into the through hole.

The first portion of the terminal tab is exposed out of the insulating member to enable it to be electrically connected to the PCM.

An end of the first portion that protrudes from the through hole is soldered to the PCM.

A length of the portion of the insulating member inserted into the through hole is between 50% and 80% of the depth of the through hole, and may be between 60% and 80% of the depth of the through hole.

The terminal tab may comprise the first portion that is narrower than the through hole and a second portion that is wider than the through hole, wherein the second portion butts up against the PCM when the first portion is inserted into the through hole.

A portion of the insulating member covering a boundary between the first portion and the second portion of the terminal tab may have a rounded shape. An end of the first portion that protrudes from the through hole may have a rounded shape.

The insulating member may comprise a polyimide film.

The insulating member may cover a plurality of terminal tabs, each having a terminal pad for connecting the terminal tab to a connection tab of a battery cell.

The battery pack may comprise a plurality of battery cells, wherein the plurality of terminal tabs comprise first and second end tabs connected to respective ends of the battery cells and intermediate tabs comprising sensing tabs for detecting a battery voltage.

According to a further aspect of the invention, there is provided a method of manufacturing a battery pack as defined above, comprising inserting a first portion of a terminal tab that is partly insulated into a through hole in a protection circuit module so that part of the insulation is inserted into the through hole with the first portion of the terminal tab and so that the uninsulated end of the first portion of the terminal tab protrudes from the other side of the through hole, the method further comprising soldering the uninsulated end to the PCM.

As described above, according to the present invention, a portion of an insulating member attached to an external surface of a terminal tab is inserted into an insertion hole of a PCM to prevent disconnection of the terminal tab in a position corresponding to the insertion hole, thereby decreasing a defect ratio of a battery pack to improve reliability of a product in which the battery pack is used.

Embodiments of the invention will now be described by way of example with reference to the accompanying drawings, in which:
FIG. 1 is a perspective view illustrating a general battery pack having a tab in a disconnected state;
FIG. 2 is a cross-sectional view illustrating the terminal tab of the general battery pack inserted into a PCM;
FIG. 3 is a cross-sectional view illustrating that a silicone layer is applied to a portion in FIG. 2;
FIG. 4 is an exploded perspective view illustrating a battery pack according to an exemplary embodiment of the present invention;
FIG. 5 is an enlarged cross-sectional view of a part C in FIG. 4 illustrating one end portion of a terminal tab according to the exemplary embodiment of the present embodiment;
FIG. 6 is a cross-sectional view illustrating one end portion of a terminal tab having a different shape from that in FIG. 5;
FIG. 7 is a perspective view illustrating the combined battery pack according to the exemplary embodiment of the present invention;
FIG. 8 is a cross-sectional view illustrating that the terminal tabs are inserted into a PCM according to the exemplary embodiment of the present invention; and
FIG. 9 is a cross-sectional view taken along a line D-D' of FIG. 7.

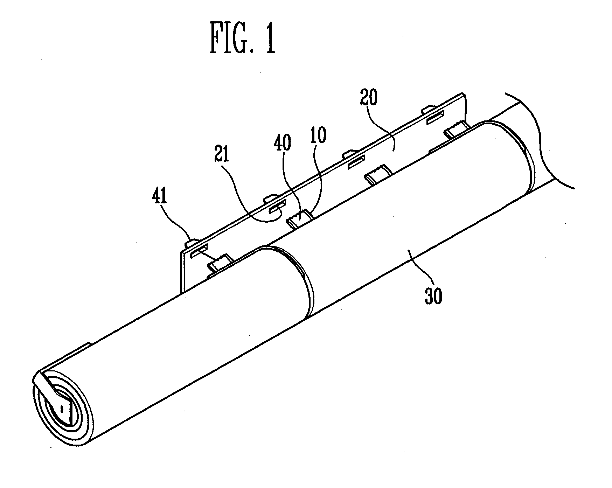

Referring to FIG. 1, a battery cell 30 is electrically connected to a protective circuit module (PCM) 20 through a terminal tab 40. The terminal tab 40 is inserted into an insertion hole 21 formed in the PCM 20, and the terminal tab 40 and the PCM 20 are fixed by soldering on a side where the terminal tab 40 is drawn out.

The terminal tab 40 may include an insulating member 10 on an external surface. The insulating member 10 is formed on a portion of the terminal tab 40 which is adjacent to the battery cell 30, but is not formed in a portion corresponding to the insertion hole 21 and a portion which is drawn out to the insertion hole 21. The terminal tab 40 drawn out to the outside through the insertion hole 21 is electrically connected to the PCM 20 by soldering.

Thus, an end portion of the terminal tab 40 inserted into the insertion hole 21 is formed to be thinner than a portion of the terminal tab 40 which the insulating member 10 is attached to. Accordingly, when the terminal tab 40 is soldered to the PCM 20 and subjected to a reliability test such as a highly accelerated life (HALT) test, the end portion of the terminal tab 40 to which the insulating member 10 is not attached can become disconnected.

Further, it is not easy to fix the PCM 20 and a solder part 41 when soldering, so that soldering efficiency decreases.

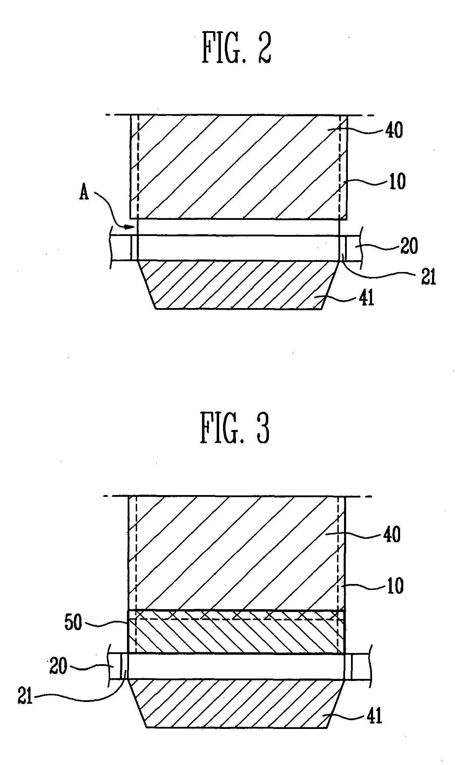

Referring to FIG. 2, in a state in which the terminal tab 40 is inserted into the insertion hole 21 of the PCM 20 and soldered, the insulating member 10 attached to the external surface of the terminal tab 40 is not in contact with the PCM 20. That is, the insulating member 10 is not attached from a portion of the terminal tab 40 before the insertion hole 21 to the end portion of the terminal tab 40 on which a solder is formed.

The reason why the insulating member 10 is not attached to the end portion of the terminal tab 40 is to form the solder part 41, but accordingly the end portion of the terminal tab 40 is formed to be thinner than a portion of the terminal tab 40 which the insulating member 10 is attached to. Thus, a portion of the terminal tab 40 disposed to the insertion hole 21 in an insertion direction of the terminal tab 40 is vulnerable to impact such as vibration or a drop. That is, the terminal tab 40 can become disconnected as a result of an impact on the PCM 20.

Here, the terminal tab 40 generally uses copper (Cu) due to a structure and a thickness of a case and material costs. However, a disconnection phenomenon occurs relatively frequently in using copper, which is softer than nickel.

Referring to FIG. 3, in order to prevent formation of a disconnected part A in FIG. 2, a silicone layer 50 may be applied to the portion of the terminal tab 40 to which the insulating member 10 is not attached before the insertion hole 21. The silicone 50 may partly overlap with the insulating member 10 and reinforces a thickness of the terminal tab 40, thereby minimizing formation of the disconnected part A in FIG. 2.

However, the application of the silicone 50 leads to an increase in manufacturing processes and costs, and disconnection may still occur in a portion of the terminal tab 40 to which the silicone 50 is applied in the insertion hole 21.

Thus, the present invention provides a battery pack in which the disconnected part A is reinforced.

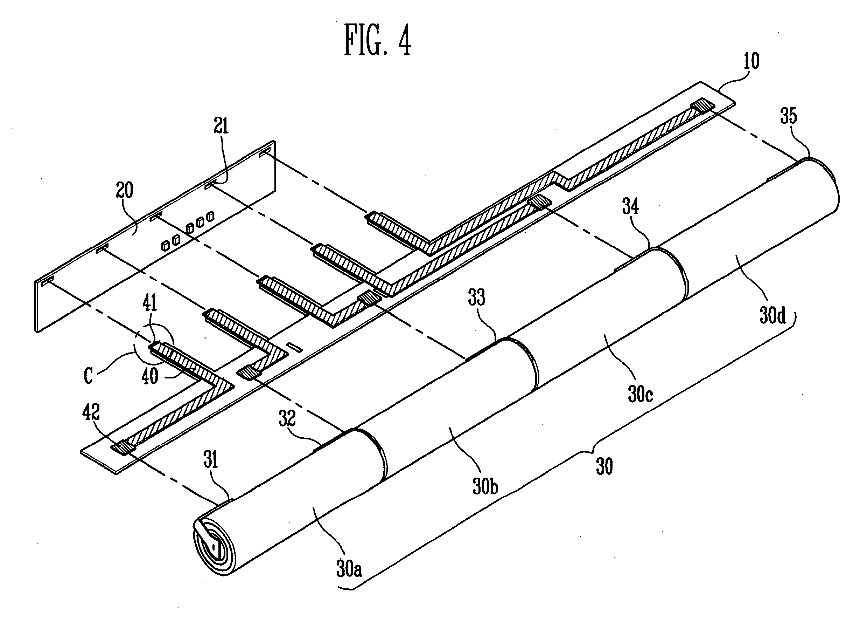

FIG. 4 is an exploded perspective view illustrating a battery pack according to an exemplary embodiment of the present invention.

Referring to FIG. 4, the battery pack according to the present embodiment includes one or more battery cells 30a, 30b, 30c, and 30d (hereinafter, collectively referred to as "30" except when description of the respective battery cells is necessary) and a PCM 20 formed on one side of the battery cells 30. Further, the battery pack includes a terminal tab 40 disposed between the battery cells 30 and the PCM 20 to electrically connect the battery cells 30 and the PCM 20. An insulating member 10 may be attached to an external surface of the terminal tab 40.

Here, the PCM 20 is constituted by a protective circuit board and electronic components mounted thereon. The PCM 20 includes the function of detecting overcharge or overdischarge of a battery to control an electric current. At least one insertion hole, or through hole, 21 into which an end portion of the terminal tab 40 is inserted may be formed in the protective circuit board.

The battery cells 30 are formed of, for example, four battery cells 30a, 30b, 30c, and 30d connected in series. Here, connection tabs 32, 33, and 34 are disposed between the respective battery cells 30, and outermost connection tabs 31 and 35 are disposed on the outermost battery cells 30a and 30d. Accordingly, the battery cells 30 may be electrically connected by the connection tabs 32, 33, and 34 disposed therebetween. Furthermore, the outermost connection tabs 31 and 35 may be used as a high current terminal when the battery pack is realized.

The terminal tab 40 electrically connecting the PCM 20 and the battery cells 30 is formed in a thin and long plate and includes a conductive material such as Cu. Moreover, except one end portion of the terminal tab 40 that is a solder part 41 and another end portion that is a terminal tab exposure part, also referred to as a terminal pad, 42, the external surface of the terminal tab 40 is covered by the insulating member 10. Thus, a plurality of terminal tabs 40 may be integrated by the insulating member 10, and the insulating member 10 may be formed in various shapes to be easily seated on an external surface of the battery cells 30. Here, the insulating member 10 may be formed of a polyimide (PI) film.

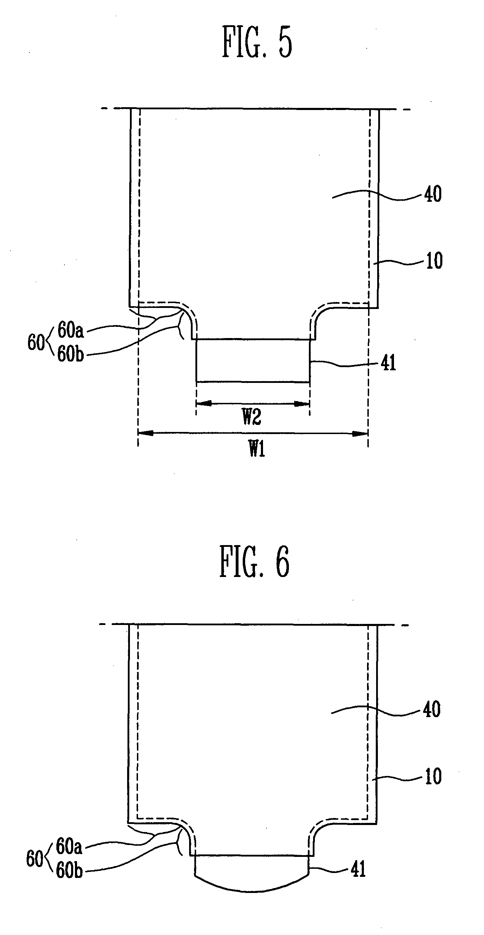

Although the entire terminal tabs 40 are shown to be exposed to the outside in FIG. 4, this is to clarify a structure of the terminal tabs 40. As described above, the external surface of the terminal tabs 40 is covered by the insulating member 10 except for the solder part 41 and the terminal tab exposure part 42. Here, one end portion of the terminal tabs 40 may be formed with a stepped part 60 (refer to FIG. 5), which will be further described with reference to FIG. 5.

FIG. 5 is an enlarged cross-sectional view of a part C in FIG. 4 illustrating one end portion of the terminal tabs according to the exemplary embodiment of the present embodiment.

Referring to FIG. 5, the stepped part 60 may be formed in an end portion of the terminal tabs 40 connected to the PCM 20. Accordingly, the insulating member 10 covering the terminal tabs 40 is attached based on a shape of the stepped part 60. The stepped part 60 may be formed of a stopper part 60a and an insertion part 60b. The insertion part 60b is formed on the end portion of the terminal tabs 40 and is a portion narrower in width than the stopper part 60a, and the stopper part 60a is a portion extending from the insertion part 60b.

Here, a width W1 of the stopper part 60a is formed to be wider than a width of the insertion hole 21 of the PCM 20 (refer to FIG. 4). Accordingly, when the terminal tabs 40 are inserted into the insertion holes 21, the insertion is stopped by the stopper part 60a, so that the terminal tabs 40 and the PCM 20 may be combined in the proper position. A width W2 of the insertion part 60b is formed to be narrower than the insertion hole 21, and thus only insertion part 60b is inserted into the insertion hole 21.

Here, the insulating member 10 may be formed from the stopper part 60a to a portion of the insertion part 60b, thereby reinforcing a thickness on a boundary between the stopper part 60a and the insertion part 60b. That is, the insulating member 10 is formed to extend in an insertion direction of the terminal tabs 40 so that a portion of the insulating member 10 is inserted into the insertion hole 21.

The boundary between the stopper part 60a and the insertion part 60b may be formed to be round. Accordingly, even if impact such as vibration or a drop happens to the terminal tabs 40, it is prevented that the terminal tabs 40 collide with the PCM 20 to be broken. Further, arrangement of the terminal tabs 40 in the insertion holes 21 may be facilitated.

FIG. 6 is a cross-sectional view illustrating one end portion of a terminal tab having a different shape from those in FIG. 5.

An insulating member 10, a terminal tab 40, and a stepped part 60 in FIG. 6 are the same as or similar to those in the embodiment with reference to FIG. 5, and thus description thereof will be omitted. In FIG. 6, an insertion part 60b of the stepped part 60 may have a round shape. Accordingly, when the terminal tab 40 is inserted into an insertion hole 21 (refer to FIG. 4), the terminal tab 40 may not cause damage to the insertion hole 21 and an injury by the insertion part 60b which may happen to a worker may also be prevented in advance.

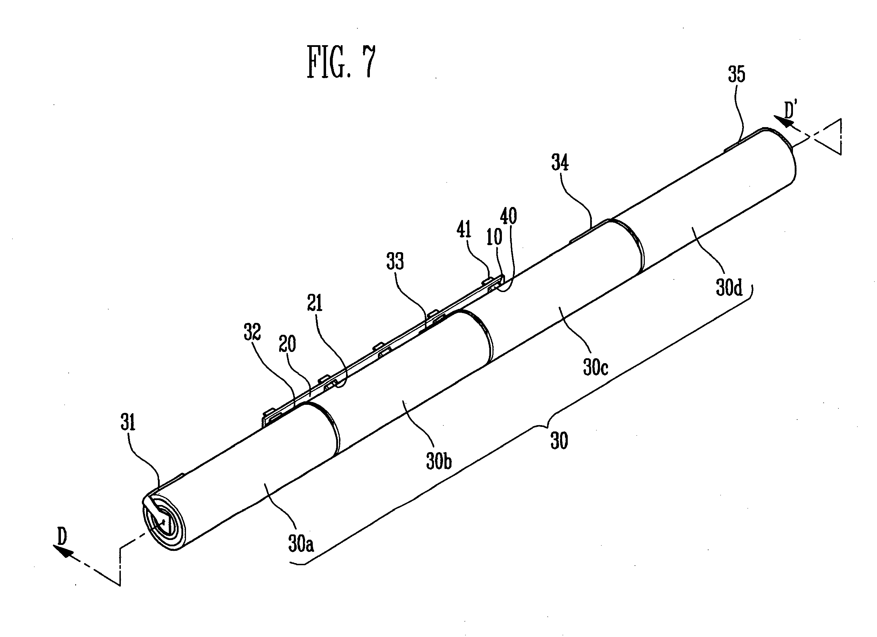

FIG. 7 is a perspective view illustrating the combined battery pack according to the exemplary embodiment of the present invention.

Referring to FIG. 7, the plurality of battery cells 30 are connected by the connection tabs 32, 33, and 34, and are electrically connected to the PCM 20 via the terminal tabs 40. Here, the insulating member 10 is attached to the external surface of the terminal tabs 40 except for the solder part 41 and the terminal tab exposure part 42 (refer to FIG. 4).

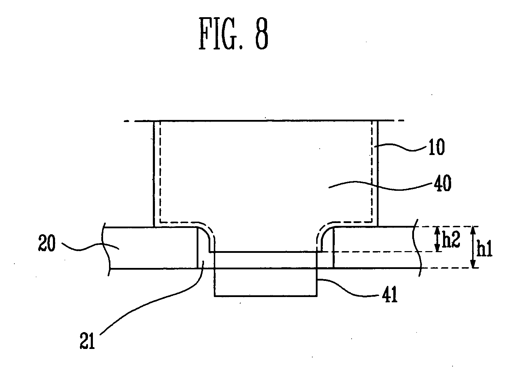

Accordingly, the solder part 41 on one side of the terminal tabs 40 is inserted into the insertion holes 21 of the PCM to be soldered to the PCM 20. The terminal tab exposure part 42 on another side of the terminal tabs 40 (refer to FIG. 8) is soldered to the connection tabs 32, 33, and 34 and the outermost connection tabs 31 and 35.

Here, the insulating member 10 attached to one external surface of the terminal tabs 40 may be formed to extend in the insertion direction of the terminal tabs 40 so that a portion of the insulating member 10 is inserted into the insertion holes 21. That is, the insulating member 10 is formed not to be exposed outside the insertion holes 21 of the PCM 20 to which the terminal tabs 40 are drawn out. Accordingly, not only the solder part 41 to solder the terminal tabs 40 and the PCM 20 is secured, but a thickness of up to a portion of the terminal tabs 40 inserted into the insertion holes 21 may be reinforced by the insulating member 10. Thus, disconnection of the terminal tabs 40 by impact such as vibration or a drop may be prevented.

FIG. 8 is a cross-sectional view illustrating that the terminal tabs are inserted into the PCM according to the embodiment of the present invention.

Referring to FIG. 8, the terminal tabs 40 are inserted into the insertion holes 21 of the PCM 20 to be soldered to the PCM 20 on a side where the terminal tabs 40 are drawn out. Here, the insulating member 10 attached to the external surface of the terminal tabs 40 is formed to extend in the insertion direction of the terminal tabs 40 so that a portion of the insulating member 10 is inserted into the insertion holes 21. Here, an end portion of the terminal tab 40 to which the insulating member 10 is not attached is the solder part 41.

A length h2 of the portion of the insulating member 10 inserted into the insertion holes 21 may be 50 to 80% of a depth h1 of the insertion holes 21. Preferably, a length h2 of the portion of the insulating member 10 inserted into the insertion holes 21 may be 60 to 80% of a depth h1 of the insertion holes 21.

When the length h2 of the insulating member 10 is less than 50% of the depth h1 of the insertion holes 21, the insulating member 10 may not be positioned in an entrance side of the insertion holes 21 when a worker inserts the terminal tabs 40 into the insertion holes 21. Accordingly, disconnection of the terminal tabs 40 occurs. Further, when the length h2 of the insulating member 10 is more than 80% of the depth h1 of the insertion holes 21, the solder part 41 decreases in area to bring about a soldering defect.

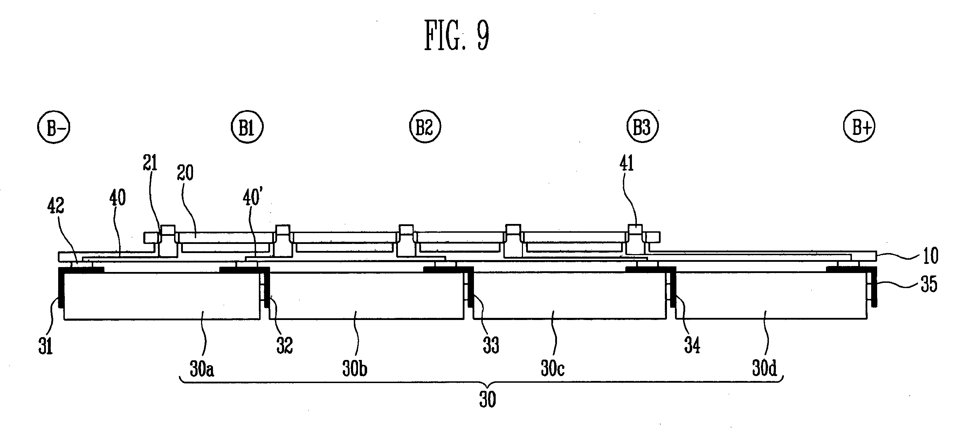

FIG. 9 is a cross-sectional view taken along a line D-D' of FIG. 7.

Referring to FIG. 9, the outermost connection tab 31 is welded to a left side of the battery cell 30a, and the connection tab 32 is welded to the battery cell 30a and the battery cell 30b. Further, the connection tab 33 is welded to the battery cell 30b and the battery cell 30c, and the connection tab 34 is welded to the battery cell 30c and the battery cell 30d. In addition, the outermost connection tab 35 is welded to a right side of the battery cell 30d. Here, opposite sides of the battery cells 30 have different polarities, wherein a right side of the battery cells 30 in a protruding terminal shape (not shown) denotes a positive pole, and an opposite flat left side denotes a negative pole.

Here, it should be noted that the left side and the right side of the battery cell 30a is not to limit the present invention but just to denote a left side and a right side shown in the drawing.

In FIG. 9, B+ and B- represent a high current terminal and denote power supply units at opposite terminals of the battery cells connected in series. B+ is a positive power supply unit and represents a highest potential terminal, and B- is a negative power supply unit and represents a lowest potential terminal. The terminal tabs 40 that are power supply wires to draw out power may be connected to the high current terminals B+ and B-. The terminal tabs 40 is for drawing out power and is distinguished from a sensing terminal tab 40' which is described later.

B1, B2, and B3 represent sensing terminals and indicate portions in which battery cells with different polarities are connected in series. The sensing terminals B1, B2, and B3 may be connected with the sensing terminal tab 40' which is a sensing wire to detect a voltage.

In the electrically connected structure, the terminal tabs 40 that are the power supply wires soldered to the outermost connection tab 31 of the high current terminal B- are connected to the PCM 20 along a surface of the battery cells 30 connected in series. The terminal tabs 40 that are the power supply wires soldered to the outermost connection tab 35 of the high current terminal B+ are connected to the PCM 20. Accordingly, the battery cells 30 are the PCM 20 are electrically connected.

Here, in a state that the terminal tabs 40 for drawing out power and the sensing terminal tab 40' are respectively soldered to the PCM 20, a portion of the insulating member 10 is attached to an external surface of the terminal tabs 40 inserted into the insertion holes 21 and the sensing terminal tab 40'. Accordingly, disconnection of the terminal tabs 40 and the sensing terminal tab 40' in a position corresponding to the insertion holes 21 may be prevented.

A real cross-sectional view of the terminal tabs 40 and the sensing terminal tab 40' is different from that in FIG. 9, while FIG. 9 is to show the terminal tabs 40 and the sensing terminal tab 40' connect the PCM 20 and the battery cells 30.

In the aforementioned embodiment, the battery pack with a 4-series (4S) structure is described as an illustrative example, but the embodiment may also be applicable to various battery packs in series and/or in parallel.

It should be understood that embodiments of the invention may be changed and modified in various ways by those skilled in the art, without departing from the scope of the present invention as defined by the claims.

## Claims

1. A battery pack comprising:
at least one battery cell (30);
a protection circuit module PCM (20) mounted to the at least one battery cell;
a terminal tab (40) to electrically connect the at least one battery cell to the PCM; and
an insulating member (10) on a surface of the terminal tab,
wherein the PCM comprises a through hole (21) into which a first portion of the terminal tab is inserted, the first portion being partly covered by the insulating member (10) so that a portion of the insulating member is inserted into the through hole, the first portion of the terminal tab being exposed out of the insulating member to enable it to be electrically connected to the PCM and an end (41) of the first portion being soldered to the PCM,
wherein a length of the portion of the insulating member inserted into the through hole is between 50 and 80% of the depth of the through hole.

2. The battery pack of claim 1, wherein the length of the portion of the insulating member inserted into the through hole is between 60 and 80% of the depth of the through hole.

3. The battery pack of any one of the preceding claims, wherein the terminal tab comprises the first portion (60b) that is narrower than the through hole and a second portion (60a) that is wider than the through hole, wherein the second portion butts up against the PCM when the first portion is inserted into the through hole.

4. The battery pack of claim 3, wherein a portion of the insulating member covering a boundary between the first portion and the second portion of the terminal tab has a rounded shape.

5. The battery pack of claim 3 or 4, wherein an end of the first portion that protrudes from the through hole has a rounded shape.

6. The battery pack of any one of the preceding claims, wherein the insulating member comprises a polyimide film.

7. The battery pack of any one of the preceding claims, wherein the insulating member covers a plurality of terminal tabs, each having a terminal pad (42) for connecting the terminal tab to a connection tab of a battery cell.

8. The battery pack of claim 7, comprising a plurality of battery cells, wherein the plurality of terminal tabs comprise first and second end tabs connected to respective ends of the battery cells and intermediate tabs comprising sensing tabs (40') for detecting a battery voltage.

9. A method of manufacturing a battery pack according to any one of the preceding claims, comprising:
inserting a first portion of a terminal tab (40) that is partly insulated into a through hole (21) in a protection circuit module (20) so that part of the insulation is inserted into the through hole with the first portion of the terminal tab and so that the uninsulated end (41) of the first portion of the terminal tab protrudes from the other side of the through hole; and
soldering the uninsulated end to the PCM (20).

## Patentansprüche

1. Batteriepack, umfassend:
mindestens eine Batteriezelle (30);
ein an der mindestens einen Batteriezelle angebrachtes Schutzschaltungsmodul PCM (20);
eine Anschlussfahne (40) zum elektrischen Verbinden der mindestens einen Batteriezelle mit dem PCM; und
ein Isolierelement (10) an einer Fläche der Anschlussfahne,
wobei das PCM ein Durchgangsloch (21) umfasst, in welches ein erster Abschnitt der Anschlussfahne eingeschoben ist, wobei der erste Abschnitt teilweise von dem Isolierelement (10) abgedeckt ist, so dass ein Abschnitt des Isolierelements in das Durchgangsloch eingeschoben ist, wobei der erste Abschnitt der Anschlussfahne aus dem Isolierelement heraus freiliegt, um seine elektrische Verbindung mit dem PCM zu ermöglichen, und ein Ende (41) des ersten Abschnitts mit dem PCM verlötet ist,
wobei eine Länge des in das Durchgangsloch eingeschobenen Abschnitts des Isolierelements zwischen 50 und 80% der Tiefe des Durchgangslochs beträgt.

2. Batteriepack nach Anspruch 1, wobei die Länge des in das Durchgangsloch eingeschobenen Abschnitts des Isolierelements zwischen 60 und 80% der Tiefe des Durchgangslochs beträgt.

3. Batteriepack nach einem der vorstehenden Ansprüche, wobei die Anschlussfahne den ersten Abschnitt (60b) umfasst, der schmaler ist als das Durchgangsloch, und einen zweiten Abschnitt (60a), der breiter ist als das Durchgangsloch, wobei der zweite Abschnitt am PCM anstößt, wenn der erste Abschnitt in das Durchgangsloch eingeschoben ist.

4. Batteriepack nach Anspruch 3, wobei ein Abschnitt des Isolierelements, der eine Grenzfläche zwischen dem ersten Abschnitt und dem zweiten Abschnitt der Anschlussfahne abdeckt, eine abgerundete Form aufweist.

5. Batteriepack nach Anspruch 3 oder 4, wobei ein Ende des ersten Abschnitts, das von dem Durchgangsloch hervorsteht, eine abgerundete Form aufweist.

6. Batteriepack nach einem der vorstehenden Ansprüche, wobei das Isolierelement einen Polyimidfilm umfasst.

7. Batteriepack nach einem der vorstehenden Ansprüche, wobei das Isolierelement eine Vielzahl von Anschlussfahnen abdeckt, die jeweils eine Anschlussfläche (42) zum Verbinden der Anschlussfahne mit einer Verbindungsfahne einer Batteriezelle aufweisen.

8. Batteriepack nach Anspruch 7, umfassend eine Vielzahl von Batteriezellen, wobei die Vielzahl von Anschlussfahnen erste und zweite Abschlussfahnen umfassen, die mit den jeweiligen Enden der Batteriezellen verbunden sind, sowie Zwischenfahnen, umfassend Abtastfahnen (40') zum Erfassen einer Batteriespannung.

9. Verfahren zum Herstellen eines Batteriepacks nach einem der vorstehenden Ansprüche, umfassend:
Einschieben eines ersten Abschnitts einer teil-isolierten Anschlussfahne (40) in ein Durchgangsloch (21) in einem Schutzschaltungsmodul (20), so dass ein Teil der Isolierung mit dem ersten Abschnitt der Anschlussfahne in das Durchgangsloch eingeschoben ist, und so dass das nicht isolierte Ende (41) des ersten Abschnitts der Anschlussfahne von der anderen Seite des Durchgangslochs hervorsteht; und Verlöten des nicht isolierten Endes mit dem PCM (20).

## Revendications

1. Bloc-batterie comprenant :
au moins une cellule de batterie (30) ;
un module de circuit de protection, PCM, (20) monté sur l'au moins une cellule de batterie ;
une languette de borne (40) destinée à connecter électriquement l'au moins une cellule de batterie au PCM ; et
un élément isolant (10) sur une surface de la languette de borne,
dans lequel le PCM comprend un trou traversant (21) dans lequel une première partie de la languette de borne est insérée, la première partie étant partiellement recouverte par l'élément isolant (10) de sorte qu'une partie de l'élément isolant soit insérée dans le trou traversant, la première partie de la languette de borne étant exposée à l'extérieur de l'élément isolant pour lui permettre d'être connectée électriquement au PCM et une extrémité (41) de la première partie étant soudée au PCM,
dans lequel une longueur de la partie de l'élément isolant insérée dans le trou traversant est comprise entre 50 et 80% de la profondeur du trou traversant.

2. Bloc-batterie de la revendication 1, dans lequel la longueur de la partie de l'élément isolant insérée dans le trou traversant est comprise entre 60 et 80% de la profondeur du trou traversant.

3. Bloc-batterie de l'une quelconque des revendications précédentes, dans lequel la languette de borne comprend la première partie (60b) qui est plus étroite que le trou traversant et une deuxième partie (60a) qui est plus large que le trou traversant, la deuxième partie venant en butée contre le PCM lorsque la première partie est insérée dans le trou traversant.

4. Bloc-batterie de la revendication 3, dans lequel une partie de l'élément isolant recouvrant une limite entre la première partie et la deuxième partie de la languette de borne a une forme arrondie.

5. Bloc-batterie de la revendication 3 ou 4, dans lequel une extrémité de la première partie qui fait saillie à partir du trou traversant a une forme arrondie.

6. Bloc-batterie de l'une quelconque des revendications précédentes, dans lequel l'élément isolant comprend un film de polyimide.

7. Bloc-batterie de l'une quelconque des revendications précédentes, dans lequel l'élément isolant recouvre une pluralité de languettes de bornes, ayant chacune une plaquette de borne (42) destinée à connecter la languette de borne à une languette de connexion d'une cellule de batterie.

8. Bloc-batterie de la revendication 7, comprenant une pluralité de cellules de batterie, dans lequel la pluralité de languettes de bornes comprennent des première et deuxième languettes d'extrémité connectées à des extrémités respectives des cellules de batterie et des languettes intermédiaires comprenant des languettes de détection (40') destinées à détecter une tension de batterie.

9. Procédé de fabrication d'un bloc-batterie selon l'une quelconque des revendications précédentes, comprenant les étapes consistant à :
insérer une première partie d'une languette de borne (40) qui est partiellement isolée dans un trou traversant (21) dans un module de circuit de protection (20) de sorte qu'une partie de l'isolant soit insérée dans le trou traversant avec la première partie de la languette de borne et de sorte que l'extrémité non isolée (41) de la première partie de la languette de borne fasse saillie à partir de l'autre côté du trou traversant ; et
souder l'extrémité non isolée au PCM (20).
